(19) Europäisches Patentamt
European Patent Office
Office européen des brevets

(11) **EP 1 845 346 A2**

(12) **EUROPÄISCHE PATENTANMELDUNG**

(43) Veröffentlichungstag:
**17.10.2007 Patentblatt 2007/42**

(51) Int Cl.:
***G01F 1/84*** *(2006.01)*

(21) Anmeldenummer: **07001460.0**

(22) Anmeldetag: **24.01.2007**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK RS** | (71) Anmelder: **KROHNE MESSTECHNIK GMBH & CO. KG**<br>**47058 Duisburg (DE)** |
| (30) Priorität: **12.04.2006 DE 102006017676** | (72) Erfinder: **Storm, Ralf**<br>**45131 Essen (DE)**<br><br>(74) Vertreter: **Gesthuysen, von Rohr & Eggert**<br>**Patentanwälte**<br>**Huyssenallee 100**<br>**45128 Essen (DE)** |

(54) **Verfahren zum Betrieb eines Coriolis-Massendurchflußmeßgeräts**

(57) Die Erfindung betrifft ein Verfahren zum Betrieb eines Coriolis-Massendurchflußmeßgeräts, mit wenigstens einem von einem Medium durchströmten Meßrohr (10), das einer Schwingungsanregung unterworfen wird, was zu resultierenden Schwingungen des Meßrohrs (10) führt, wobei zur Detektion einer Mehrphasenströmung eine erste Indikatorgröße verwendet wird. Erfindungsgemäß wird zur Detektion der Mehrphasenströmung eine zusätzliche, von der ersten Indikatorgröße unabhängige zweite Indikatorgröße verwendet. Damit wird ein derartiges Verfahren zum Betrieb eines Coriolis-Massendurchflußmeßgeräts (1) erzielt, mit dem die Detektion von Mehrphasenströmungen, insbesondere von Zweiphasenströmungen, auf sichere Weise möglich ist, ohne Annahmen bezüglich der Eigenschaften der einzelnen Phasen des strtimenden Mediums treffen zu müssen.

Fig. 1

EP 1 845 346 A2

**Beschreibung**

Die Erfindung betrifft ein Verfahren zum Betrieb eines Coriolis-Massendurchflußmeßgeräts, mit wenigstens einem von einem Medium durchströmten Meßrohr, das einer Schwingungsanregung unterworfen wird, was zu resultierenden Schwingungen des Meßrohrs führt, wobei zur Detektion einer Mehrphasenströmung eine erste Indikatorgröße verwendet wird.

Coriolis-Massendurchflußmeßgeräte weisen im allgemeinen ein einziges Meßrohr oder eine Mehrzahl von Meßrohren auf, durch das bzw. die ein Medium strömt, dessen Massendurchfluß bestimmt werden soll. Dabei sind unterschiedliche Anordnungen und Geometrien der Meßrohre bekannt. So existieren z. B. Coriolis-Massendurchflußmeßgeräte mit einem einzigen geraden Meßrohr sowie Coriolis-Massendurchflußmeßgeräte mit zwei gekrümmt verlaufenden Meßrohren.

Gemein ist diesen Conohs-Massendurchflußmeßgeräten, daß die vom Medium durchströmten Meßrohre ein mechanisches Schwingungssystem bilden, das durch das strömende Medium beeinflußt wird. So verändert die Dichte des Mediums die Resonanzfrequenz des Schwingungssystems, während die Massendurchflußrate des Mediums die Schwingungsform verändert. Damit kann neben dem Massendurchfluß unter anderem auch die Dichte des strömenden Mediums bestimmt werden.

Coriolis-Massendurchflußmeßgeräte zeichnen sich durch eine hohe Meßgenauigkeit aus. So ist die Messung des Massendurchflusses mit einer Genauigkeit von unter 0,1 % möglich. Darüber hinaus können mit Coriolis-Massendurchflußmeßgeräten neben dem Massendurchfluß weitere Werte bestimmt werden, die zum Teil aus primären Meßwerten abgeleitet werden. Beispiele für solche abgeleiteten Werte sind der Volumendurchfluß, die Massen- bzw. Volumenmenge sowie die Konzentrationen des strömenden Mediums. Damit stellen Coriolis-Massendurchflußmeßgeräte multivariable Meßgeräte dar, die häufig nicht nur für eine primäre Meßaufgabe verwendet werden, sondern zusätzlich auch noch wichtige sekundäre Diagnose- und Qualitätsinformationen über einen Prozeß liefern können.

Informationen über Mehrphasenströmungen, wie Zweiphasenströmungen, insbesondere nämlich die Erkennung des Auftretens einer solchen Mehrphasenströmung sowie Aussagen über die Ausprägung der Mehrphasenströmung, sind bisher mit Coriolis-Massendurchflußmeßgeräten noch nicht sicher gewinnbar. Beispiele für Mehrphasenströmungen, konkret nämlich für Zweiphasenströmungen, sind Gasblasen in einer Flüssigkeit, die z. B. verursacht sein können durch Kavitation in Ventilen oder Pumpen oder das Ansaugen von Luft an Undichtigkeiten. Ferner ist ein Beispiel für eine Zweiphasenströmung ein System aus Feststoffen in einer Flüssigkeit, z. B. verursacht durch Kristallisationen oder dem plötzlichen Ablösen von Ablagerungen im Rohrleitungssystem, durch das das Medium strömt. Schließlich liegt ein Beispiel für Zweiphasenströmungen in Gemischen nicht lösbarer Flüssigkeiten, also in Emulsionen, die z. B. durch einen Wechsel des durch das Rohrleitungssystem strömenden Mediums verursacht sein können.

Herkömmliche Lösungen zur Erkennung von Mehrphasenströmungen bei einem Coriolis-Massendurchflußmeßgerät beruhen z. B. auf der Bestimmung der Antriebsleistung, die benötigt wird, um die mechanischen Schwingungen im Coriolis-Massendurchflußmeßgerät zu erhalten, wie z. B. in der DE 44 23 168 A1 beschrieben. In der Praxis ist die Größe "Installationsfaktor" eingeführt worden, die als dimensionsloses Maß der Antriebsleistung entspricht, die zum Erreichen einer vorgegebenen Schwingungsamplitude erforderlich ist. Diese Größe ist primär zur Beurteilung der Qualität des Einbaus des Coriolis-Massendurchflußmeßgeräts in das Rohrleitungssystem vorgesehen. Gasblasen im flüssigen Medium erhöhen jedoch ebenfalls den Leistungsbedarf und führen zu einem Anstieg des Installationsfaktors, so daß der Installationsfaktor auch zur Detektion einer Mehrphasenströmung verwendet werden kann.

Nachteilig ist jedoch die Tatsache, daß dieser Wert alleine nicht zur sicheren Erkennung von Gasblasen ausreicht, da insbesondere neben der Qualität des Einbaus des Coriolis-Massendurchflußmeßgeräts z. B. auch die Viskosität des Mediums einen Einfluß auf den Leistungsbedarf des Coriolis-Massendurchflußmeßgeräts haben kann. Dadurch ist die Verwendung der Antriebsleistung zur Erfassung einer Mehrphasenströmung mit der Gefahr einer fehlerhaften Detektion einer derartigen Mehrphasenströmung im Falle einer Änderung der Viskosität oder im Falle einer Änderung der Einbaubedingungen verbunden.

Eine zweite herkömmliche Lösung zur Erkennung bzw. Bestimmung von Mehrphasenströmungen basiert auf der Verwendung von Referenzdichten, wie z. B. in der US 4,689,989 beschrieben. Dabei wird die Dichte der Mehrphasenströmung verglichen mit bekannten Dichten der einzelnen Phasen. Nachteilig ist dabei jedoch die Notwendigkeit, die Dichten der einzelnen Komponenten des strömenden Mediums a priori zu kennen. Somit ist diese Diagnose nur in einem speziellen Prozeß und nicht allgemein realisierbar.

Damit ist es die Aufgabe der Erfindung, ein derartiges Verfahren zum Betrieb eines Coriolis-Massendurchflußmeßgeräts anzugeben, mit dem die Detektion von Mehrphasenströmungen, insbesondere von Zweiphasenströmungen, auf sichere Weise möglich ist, ohne Annahmen bezüglich der Eigenschaften der einzelnen Phasen des strömenden Mediums treffen zu müssen.

Ausgehend von dem eingangs beschriebenen Verfahren ist diese Aufgabe dadurch gelöst, daß zur Detektion der Mehrphasenströmung eine zusätzliche, von der ersten Indikatorgröße unabhängige zweite Indikatorgröße verwendet wird.

Erfindungsgemäß ist also vorgesehen, daß zur Detektion der Mehrphasenströmung wenigstens zwei voneinander unabhängige Indikatorgrößen verwendet werden, was bedeutet, daß diese Indikatorgrößen in unterschiedlicher Weise von äußeren Einflüssen abhängen. Auf diese Weise wird die Gefahr verringert, fälschlicherweise eine Mehrphasenströmung zu detektieren, obwohl lediglich die Änderung einer äußeren Einflußgröße erfolgt ist, die eine Indikatorgröße in die gleiche Richtung ändert, wie eine Mehrphasenströmung.

Mit anderen Worten kann das Vorsehen einer Mehrzahl von Indikatorgrößen gewährleisten, daß alleine die Veränderung einer Indikatorgröße in eine Richtung, die dem Vorliegen einer Mehrphasenströmung entsprechen würde, noch nicht ausreichend ist, um das Vorliegen einer derartigen Mehrphasenströmung zu bestätigen. Vielmehr muß auch bei wenigstens einer zweiten Indikatorgröße ein entsprechender Effekt auftreten, um eine Mehrphasenströmung positiv zu detektieren. Eine fälschliche Anzeige des Vorliegens einer Mehrphasenströmung kann auf diese Weise drastisch reduziert werden.

Grundsätzlich kann die erste Indikatorgröße aus einer Vielzahl voneinander verschiedener Gruppen von Größen des Coriolis-Massendurchflußmeßgeräts stammen. Gemäß einer bevorzugten Weiterbildung der Erfindung ist jedoch vorgesehen, daß die erste Indikatorgröße auf

a) einer Größe basierend auf Reibungsverlusten innerhalb der Mehrphasenströmung,

b) einer Größe basierend auf einer Inhomogenität der Mehrphasenströmung,

c) einer Größe basierend auf einer Modellierung des nominellen Verhaltens des Coriolis-Massendurchflußmeßgeräts oder

d) einer Größe basierend auf Laufzeiteffekten der Mehrphasenströmung zwischen zwei in Längsrichtung des Meßrohrs voneinander beabstandeten Erfassungsstellen für die resultierenden Schwingungen

beruht und die zweite Indikatorgröße auf einer anderen dieser Größen a) - d) beruht.

Gemäß dieser bevorzugten Weiterbildung der Erfindung kann die erste Indikatorgröße also aus einer von vier voneinander verschiedenen Gruppen gewählt sein, während die zweite Indikatorgröße dann aus einer anderen dieser Gruppen gewählt ist. Mit anderen Worten bedeutet dies, daß die vier zuvor genannten Gruppen von unterschiedlichen Größen im Sinne der Erfindung voneinander unabhängige Indikatorgrößen liefern.

Grundsätzlich kann es ausreichend sein, zwei voneinander unabhängige Indikatorgrößen zur Detektion einer Mehrphasenströmung zu verwenden. Gemäß einer bevorzugten Weiterbildung der Erfindung ist jedoch vorgesehen, daß zur Detektion der Mehrphasenströmung wenigstens eine dritte Indikatorgröße verwendet wird. Dabei ist es bei der Verwendung einer dritten Indikatorgröße sowie bei der Verwendung weiterer Indikatorgrößen grundsätzlich möglich, daß diese aus einer Gruppe stammen, die von der Gruppe der ersten Indikatorgröße und von der Gruppe der zweiten Indikatorgröße verschieden ist.

Während die erste Indikatorgröße und die zweite Indikatorgröße erfindungsgemäß unabhängig voneinander sein müssen und damit aus voneinander verschiedenen Gruppen stammen müssen, ist dies für die dritte und für weitere Indikatorgrößen nicht zwingend erforderlich, so daß die dritte und weitere Indikatorgrößen auch aus solchen Gruppen stammen können, aus denen die erste bzw. die zweite Indikatorgröße stammen.

Grundsätzlich können die Indikatorgrößen auf beliebige Art aus den bestimmbaren Größen des Coriolis-Massendurchflußmeßgffäts gebildet sein, so lange den Indikatorgrößen feste Regeln zugeordnet werden können, die angeben, in welche Richtung sich eine Indikatorgröße verändern muß, um auf das Vorliegen einer Mehrphasenströmung hinzudeuten. Gemäß einer bevorzugen Weiterbildung der Erfindung ist jedoch vorgesehen, daß die Indikatorgrößen jeweils einen größeren Wert zeigen, je stärker ausgeprägt die Mehrphasenströmung ist.

Gemäß einer bevorzugten Weiterbildung der Erfindung ist ferner vorgesehen, daß zur Bestimmung einer Größe basierend auf Reibungsverlusten innerhalb der Mehrphasenströmung ausgewertet wird/werden: Die zur Schwingungsanregung des Meßrohrs erforderliche Antriebsleistung, die Antriebsamplitude, die resultierende Schwingungsamplitude oder/und wenigstens eine von einer oder mehreren dieser Größen abgeleitete Größe. Insbesondere kann in diesem Zusammenhang gemäß einer bevorzugten Weiterbildung der Erfindung vorgesehen sein, daß die Mittelwerte dieser Größen verwendet werden.

Gemäß einer bevorzugten Weiterbildung der Erfindung ist ferner vorgesehen, daß eine Größe basierend auf der Inhomogenität der Mehrphasenströmung aus dem Rauschen eines internen Signals des Coriolis-Massendurchflußmeßgeräts gewonnen wird. Diese bevorzugte Weiterbildung der Erfindung beruht darauf, daß eine Mehrphasenströmung als stochastischer Rauschprozeß angesehen werden kann, der die Signale des Coriolis-Massendurchflußmeßgeräts stochastisch stört.

Gemäß einer bevorzugten Weiterbildung der Erfindung ist bzw. sind als internes Signal des Coriolis-Massendurchflußmeßgeräts insbesondere die Phasendifferenz zwischen zwei an in Längsrichtung des Meßrohrs voneinander beabstandeten Erfassungsstellen erfaßten Signalen für die resultierenden Schwingungen, die Eigenfrequenz des durchströmten Meßrohrs, die Phasendifferenz zwischen der Schwingungsanregung und den resultierenden Schwingungen, die momentane Amplitude der Antriebsleistung pro Schwingungsamplitude oder/und wenigstens eine von einer oder mehrerer dieser Größen abgeleitete Größe, wie der Massendurchfluß durch das Meßrohr oder/und die Dichte des strömenden Mediums, vorgesehen. Schließlich ist gemäß einer bevorzugten Weiterbildung der Erfindung dabei insbesondere vorgesehen, daß die Varianz, die Standardabweichung oder die Differenz aus Maximalwert und Minimalwert eines Zeitintervalls für eine oder mehrere dieser Größen bestimmt wird.

Gemäß einer bevorzugten Weiterbildung der Erfindung ist ferner zur Bestimmung einer Größe basierend auf einer Modellierung des nominellen Verhaltens des Coriolis-Massendurchflußmeßgeräts die Abweichung eines erfaßten Signals von einem aufgrund der Modellierung erwarteten Signal vorgesehen. Dabei ist gemäß einer bevorzugten Weiterbildung der Erfindung insbesondere vorgesehen, daß als erfaßtes Signal ein Signal der Schwingungsanregung des Meßrohrs, ein Signal der resultierenden Schwingungen des Meßrohrs oder/und wenigstens eine von einer oder mehreren dieser Größen abgeleitete Größe verwendet wird/werden.

Schließlich ist gemäß einer bevorzugten Weiterbildung der Erfindung vorgesehen, daß zur Bestimmung einer Größe basierend auf Laufzeiteffekten der Mehrphasenströmung zwischen zwei in Längsrichtung des Meßrohrs voneinander beabstandeten Erfassungsstellen für die resultierenden Schwingungen die Abweichung der berechneten Laufzeit aufgrund des ermittelten Massendurchflusses von einer für die Mehrphasenströmung bestimmten Laufzeit ermittelt wird. Damit wird gemäß dieser bevorzugten Weiterbildung der Erfindung eine vierte Gruppe von Indikatorgrößen definiert, die darauf beruhen, daß das Rauschen eines einlaufseitigen bzw. eines auslaufseitigen Signals miteinander korreliert und daraus die Laufzeit der Mehrphasenströmung bestimmt wird, wobei diese wiederum verglichen wird mit der Laufzeit, die sich aufgrund des berechneten Massendurchflusses ergeben würde. Je größer der dabei ermittelte Unterschied ist, um so größer ist die Ausprägung der Mehrphasenströmung.

Nachfolgend wird die Erfindung anhand eines bevorzugten Ausführungsbeispiels unter Bezugnahme auf die Zeichnung im einzelnen erläutert. In der Zeichnung zeigt

Fig. 1 schematisch ein Coriolis-Massendurchflußmeßgerät zur Verwendung mit einem Verfahren gemäß einem bevorzugten Ausführungsbeispiel der Erfindung,

Fig. 2 schematisch den Meßumformer des Coriolis-Massendurchflußmeßgeräts,

Fig. 3 schematisch die Auswerteelektronik des Coriolis-Massendurchflußmeßgeräts und

Fig. 4 schematisch eine Zweiphasenströmung im Meßrohr des Coriolis-Massendurchflußmeßgeräts.

Das erfindungsgemäße Verfahren beruht auf der Verknüpfung von zwei oder mehr Indikatorgrößen, um eine Mehrphasenströmung zu detektieren. Durch die Verknüpfung mehrerer Indikatorgrößen wird eine sichere Detektion einer Mehrphasenströmung sichergestellt, was bei der Verwendung einer einzelnen Indikatorgröße nicht erreichbar wäre. Um dies zu realisieren, ist nun folgendes vorgesehen:

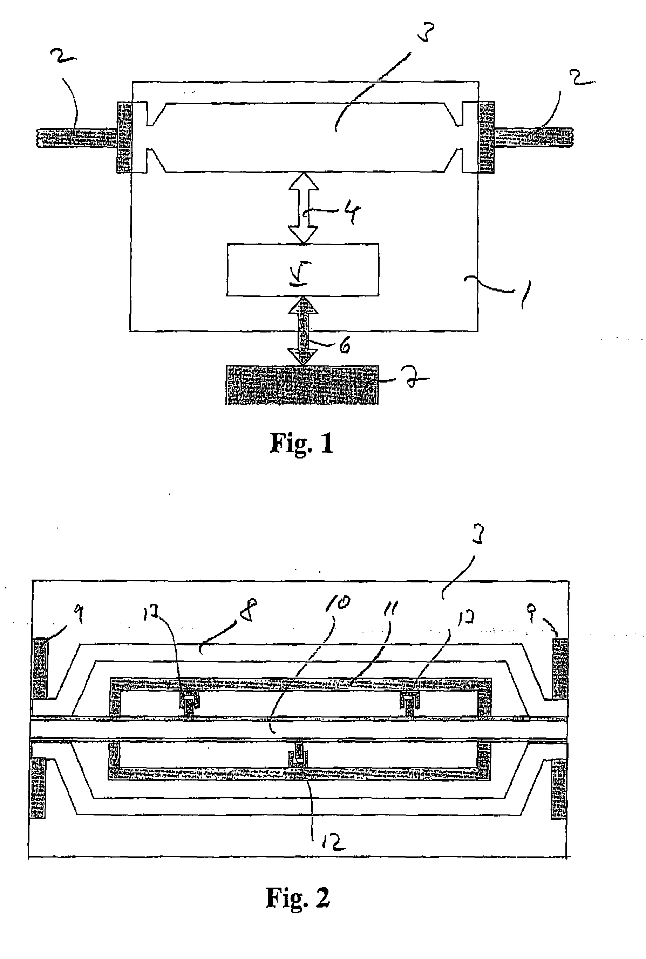

Fig. 1 zeigt das Schema eines Coriolis-Massendurchflußmeßgeräts, zur Verwendung mit einem Verfahren gemäß einem bevorzugten Ausführungsbeispiel der Erfindung. Das Coriolis-Massendurchflußmeßgerät 1 ist in ein Rohrleitungssystem 2 eingebaut, durch das das Medium strömt, dessen Massendurchfluß gemessen werden soll. Das Coriolis-Massendurchflußmeßgerät 1 weist einen Meßumformer 3 auf, der über elektrische Verbindungen 4 mit einer Auswerteelektronik 5 verbunden ist. Über Ausgänge 6 können die von der Auswerteelektronik 5 ermittelten Daten an ein externes Gerät, wie eine Anzeigeeinrichtung 7, ausgegeben werden.

Der Meßumformer 3 des Coriolis-Massendurchflußmeßgeräts 1 ist in Fig. 2 im Detail dargestellt. Der Meßumformer 3 weist ein Gehäuse 8 und Flansche 9 auf, mittels derer er in das Rohrleitungssystem 2 eingebaut ist. Das Medium, dessen Massendurchfluß gemessen werden soll, strömt durch ein einziges gerades Meßrohr 10. Zur Schwingungsanregung des Meßrohrs 10 ist innerhalb eines Trägerrohrs 11 ein Schwingungserzeuger 12 vorgesehen. Die resultierenden Schwingungen des Meßrohrs 10 werden von zwei Schwingungsaufnehmern 13 erfaßt.

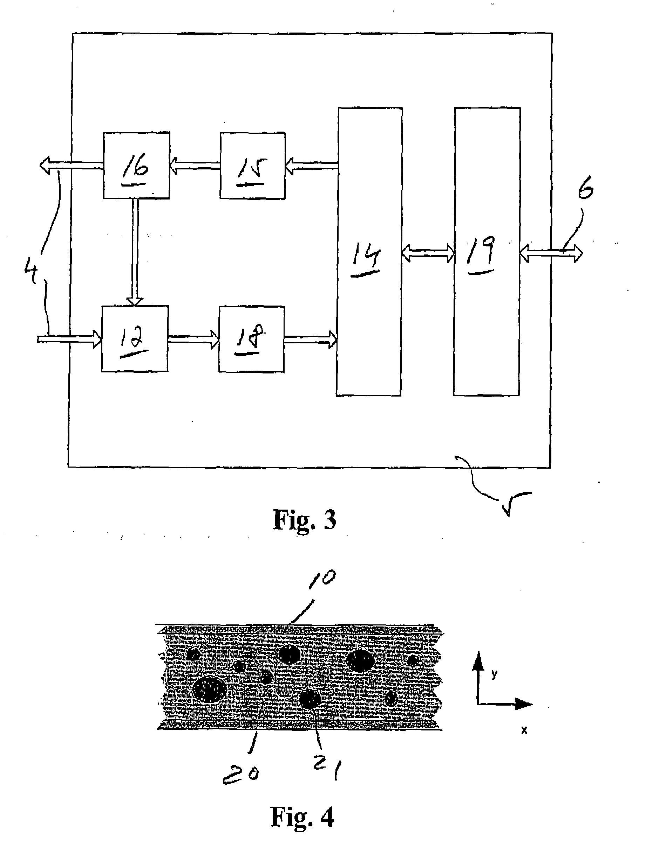

Aus Fig. 3 ist die Auswerteelektronik 5 im Detail ersichtlich. Wie zuvor schon beschrieben, ist die Auswerteelektronik 5 über elektrische Verbindungen 4 mit dem Meßumformer 3 verbunden und kommuniziert über Ausgänge 6 mit einem externen Gerät. Die Auswerteelektronik 5 weist eine Recheneinheit 14 auf, die die Ansteuerung des Schwingungserzeugers 12 übernimmt. Diese Ansteuerung wird digital erzeugt und über einen Digital/Analog-Wandler 15 an eine Treiberschaltung 16 übertragen, die nicht weiter dargestellte Elemente zur Leistungsverstärkung und Leistungsanpassung, Entstörung, Filterung und Schutz für Überspannungen enthält. Von dort aus erfolgt die Übertragung, wie zuvor schon ausgeführt, über die elektrischen Verbindungen 4.

Die von den Schwingungsaufnehmem 13 erfaßten Signale werden über die elektrischen Verbindungen 4 einer analogen Vorverarbeitungsschaltung 17 zugeführt. Von dort wird das Signal auf einen Analog/Digital-Wandler 18 geleitet, der die digitalisierten Signale an die Recheneinheit 14 weitergibt. Aus diesen Signalen bestimmt die Recheneinheit 14 dann die primären Meßwerte des Coriolis-Massendurchflußmeßgeräts 1, wie den Massendurchfluß und die Dichte des durch das Meßrohr 10 strömenden Mediums. Diese Werte werden dann an eine Ausgangseinheit 19 weitergegeben, die über die Ausgänge 6, wie zuvor schon ausgeführt, mit einem externen Gerät kommuniziert. Die Recheneinheit 14 ist auch für die Detektion einer Mehrphasenströmung verantwortlich, gemäß dem vorliegend beschriebenen bevorzugten Ausführungsbeispiel nämlich für die Erfassung einer Zweiphasenströmung.

Aus Fig. 4 ist ein Längsschnitt durch einen Abschnitt des Meßrohrs 10 mit einer Zweiphasenströmung in schematischer Darstellung ersichtlich. Eine solche Zweiphasenströmung weist im allgemeinen ein Trägermedium 20 als erste Phase auf, das als zweite Phase unregelmäßige Einschlüsse eines zweiten Mediums 21 aufweist. Ein Beispiel für eine solche Zweiphasenströmung ist Wasser als Trägermedium 20 mit unterschiedlich großen Luftblasen als Einschlüssen. Diese Zweiphasenströmung aus dem Trägermedium 20 und den Einschlüssen aus Luft als zweitem Medium 21 wird in Richtung der x-Koordinate durch das Meßrohr 10 des Coriolis-Massendurchflußmeßgeräts 1 geführt.

Gemäß dem vorliegend beschriebenen bevorzugten Ausführungsbeispiel der Erfindung wird nun eine Zweiphasenströmung durch eine Verknüpfung einer Mehrzahl von Indikatorgrößen detektiert, wie im folgenden ausgeführt wird. Dabei ist wesentlich, daß die Indikatorgrößen sowie die Verknüpfung von Indikatorgrößen die Zweiphasenströmung nicht linear abbilden müssen. Vielmehr ist es ausreichend, Schwellwerte zu definieren, bei deren Überschreitung das Vorhandensein einer Zweiphasenströmung signalisiert wird. Darüber hinaus läßt sich über Verknüpfungen der Indikatorgrößen auch eine qualitative Aussage über die Ausprägung der Zweiphasenströmung liefern, also z. B. über den Anteil von Luftblasen im Wasser. Im übrigen kann ein gegebenenfalls nichtlineares Verhalten der einzelnen Indikatorgrößen auch durch die geeignete Wahl der Verknüpfung der Indikatorgrößen linearisiert werden.

Eine erste Gruppe von möglichen Indikatorgrößen für eine Zweiphasenströmung basiert auf Reibungsverlusten innerhalb der Zweiphasenströmung. Der Strömungszustand, wie in Fig. 4 schematisch dargestellt, führt zu einer Erhöhung der benötigten Antriebsleistung. Dies beruht darauf, daß das Meßrohr 10 in Fig. 4 zu Schwingungen in Richtung der y-Koordinate angeregt wird. Durch diese Schwingungen werden auch das Trägermedium 20 und die Einschlüsse des zweiten Mediums 21 zu Schwingungen in Richtung der y-Koordinate angeregt. Aufgrund der unterschiedlichen Dichten der beiden Phasen sind die resultierenden Bewegungen der beiden Phasen voneinander verschieden. Außerdem kommt es zu einer Relativbewegung zwischen dem Trägermedium 20 und dem zweiten Medium 21. Die durch diese Relativbewegung auftretenden Reibungsverluste müssen vom Antrieb zusätzlich aufgebracht werden, was zu einer Erhöhung der benötigten mittleren Antriebsleistung im Vergleich zu einer Einphasenströmung führt.

Diese Reibungsverluste können auf verschiedenen Arten bestimmt werden, z. B. durch Messen der elektrischen Leistung, mit der der Schwingungserzeuger 12 betrieben wird. Alternativ kann ein anderes Maß für die Größe der Antriebsleistung verwendet werden, wie die Antriebsamplitude.

Die Antriebsleistung alleine ist nur im Falle einer konstanten Schwingungsamplitude des Meßrohrs 10 ein zuverlässiges Maß für die durch die Zweiphasenströmung verursachten Verluste. So kann eine Änderung der Reibungsverluste auch zu einer Änderung der Schwingungsamplitude des Meßrohrs 10 führen, wenn z. B. die Antriebsleistung durch die Treiberschaltung 16 begrenzt ist. Deshalb ist es zweckmäßig, für die Bestimmung der Reibungsverluste die Antriebsleistung $P_A$ im Verhältnis zur momentanen Schwingung des Meßrohrs 10 zu betrachten.

Diese Schwingung kann z. B. durch die Amplitude oder den Effektivwert eines Signals eines Schwingungsaufnehmers 13 oder durch die Amplitude oder den Effektivwert einer Verknüpfung der Signale mehrerer Schwingungssensoren 13 bestimmt werden. Durch die Kombination der möglichen Größen für die Antriebsleistung $P_A$ bzw. die Antriebsamplitude und resultierender Schwingungsamplituden ergibt sich die erste Gruppe von Indikatorgrößen. Beispielsweise können als Indikatorgrößen folgende Werte verwendet werden:

$$I_{11} = \frac{MW(P_A)}{MW(\textit{Amplitude der Summe der Schwingungssensorsignale})},$$

$$I_{12} = MW\left(\frac{\textit{Amplitude des Ansteuerungssignals}}{\textit{Amplitude eines Schwingungssensorsignals}}\right),$$

$$I_{13} = MW \left( Verstärkung\ Amplitudenregler \right).$$

Die Funktion MW (x) ist dabei eine Rechenvorschrift zur wenigstens näherungsweisen Berechnung des Mittelwerts des Arguments x.

Die Indikatorgrößen der zuvor beschriebenen ersten Gruppe alleine sind nicht ausreichend für eine sichere Detektion der Zweiphasenströmung. Dies liegt daran, daß die Reibungsverluste der Schwingungen des Meßrohrs 10 nicht alleine von der Zweiphasenströmung beeinflußt werden. Auch Änderungen der Temperatur im Coriolis-Massendurchflußmeßgerät 1 können zu einer Änderung der inneren Reibungsverluste führen, z. B. an den Verbindungsstellen zwischen Meßrohr 10 und Trägerrohr 11, Auch eine Änderung des sfirömenden Mediums, vor allem eine Änderung dessen Viskosität, führt zu einer Änderung der Reibungsverluste.

Daher sind weitere Gruppen von Indikatorgrößen vorgesehen. Eine zweite Gruppe von Indikatorgrößen basiert nun auf einer Inhomogenität der Zweiphasenströmung. Wie in Fig. 4 dargestellt, ist die Verteilung und Ausprägung der Einschlüsse des zweiten Mediums 21 im Trägermedium 20 ungleichmäßig, d. h., daß Größe und Anzahl der Einschlüsse des zweiten Mediums 21 im Meßrohr 10 zu unterschiedlichen Beobachtungszeitpunkten unterschiedlich sind, selbst wenn die zeitlichen Mittelwerte von Größe und Anzahl konstant sind. Eine Zweiphasenströmung kann somit als stochastischer Rauschprozeß angesehen werden, der die Signale des Coriolis-Massendurchflußmeßgeräts 1 stochastisch stört.

Die zweite Gruppe von Indikatorgrößen für die Zweiphasenströmung wird somit aus dem Rauschen von internen Signalen des Coriolis-Massendurchflußmeßgeräts 1 gewonnen. Dabei sind mögliche auswertbare Signale zur Nutzung als Indikatorgrößen alle Signale, die in direktem oder indirektem Zusammenhang mit dem zu messenden Medium stehen, wie:

1. Der Massendurchfluß $\dot{m}$ bzw. die Phasendifferenz $\Delta\varphi$ zwischen den von den Schwingungsaufnehmern 13 erfaßten Signalen:

$$I_{21} = R(\dot{m}).$$

Da der Massendurchfluß aus der Phasendifferenz zwischen den von den beiden Schwingungsaufnehmem 13 erfaßten Signalen bestimmt wird, sind diese beiden Größen bezüglich der Detektion eines vom Medium ausgehenden Rauschens äquivalent. Da sich die Masse im Meßrohr 10 abhängig von der stochastischen Verteilung der Phasen ändert, ändert sich ebenfalls der Massendurchfluß durch das Meßrohr 10 abhängig von der Zweiphasenströmung.

2. Dichte $\rho$ bzw. Frequenz $\omega_A$ der Antriebssignale:

$$I_{22} = R(\rho).$$

Da die Dichte aus der Frequenz der Antriebssignale bestimmt wird, sind diese beiden Größen bezüglich der Detektion eines vom Medium ausgehenden Rauschens äquivalent. Die Masse im Meßrohr 10 ändert sich abhängig von der stochastischen Verteilung der Phasen, und damit ändert sich ebenfalls die Dichte im Meßrohr 10.

3. Phasendifferenz $\varphi_{AS}$ zwischen Anregungssignalen und resultierenden Schwingungsensorsignalen:

$$I_{23} = R(\varphi_{AS}).$$

Das Meßrohr 10 wird gemäß dem vorliegend beschriebenen bevorzugten Ausführungsbeispiel der Erfindung in mechanischer Resonanz betrieben. Dies wird über eine Regelung der Phasendifferenz $\varphi_{AS}$ zwischen den Anregungssignalen und der Summe der erfaßten Schwingungssignale erreicht. In Resonanz ist die Phasendifferenz $\varphi_{AS}$ gleich Null. Wenn sich die Dichte im Meßrohr 10 aufgrund einer Zweiphasenströmung stochastisch ändert, so ändert sich die mechanische Resonanzfrequenz. Bis die Regelung die Frequenz der Anregung auf die neue Resonanzfrequenz einstellt, kommt es somit zu einer ebenfalls näherungsweise stochastischen Änderung der Phasendifferenz $\varphi_{AS}$.

4. Momentane Amplitude der Antriebsleistung $P_A$ pro Schwingungsamplitude $\hat{S}$:

$$I_{24} = R\left(\frac{P_A}{\hat{S}}\right).$$

Wie zuvor dargestellt, erhöht die Zweiphasenströmung den mittleren Bedarf an der Antriebsleistung pro erreichter mittleren Schwingungsamplitude. Dies führt zu den Indikatorgrößen der zuvor beschriebenen ersten Gruppe. Hinzu kommt nur noch die stochastische Änderung dieser Größen bzw. die stochastische Änderung des Quotienten aus momentaner Antriebsleistung und momentaner Schwingungsamplitude. Im Gegensatz zu den Mittelwerten, die für die Indikatorgrößen aus der ersten Gruppe verwendet werden, ist die Änderung der Momentanwerte z. B. nicht abhängig von der mittleren Viskosität eines einphasigen Mediums.

Dabei stellt die Funktion R(x) jeweils eine geeignete Rechenvorschrift dar, um ein Maß für das Rauschen des Signals x zu bestimmen. Dies kann in der Recheneinheit 14 z. B, durch die Bestimmung der

1. Varianz,

2. Standardabweichung oder

3. Differenz aus Maximal- und Minimalwert in einem Zeitintervall

des jeweiligen Signals x bestimmt werden.

Dabei ist zu beachten, daß sich das Rauschen im jeweiligen Signal vom eingebrachten Rauschen durch die Zweiphasenströmung unterscheiden kann aufgrund von Filterung durch

1. das aus dem Meßrohr 10 und dem Trägerrohr 11 bestehenden mechanischen Schwingungssystem,

2. die Übertragungseigenschaften der verwendeten Schwingungserzeuger 12 und Schwingungsaufnehmer 13,

3. die aus dem Digital/Analog-Wandler 15, der Treiberschaltung 16, der analogen Verarbeitungsschaltung 17 und dem Analog/Digital-Wandler 18 bestehende Signalkette sowie

4. die Verarbeitung in der Recheneinheit 14,

je nachdem, an welcher Stelle das Signal x abgegriffen wird.

Eine dritte Gruppe von Indikatorgrößen beruht weiterhin auf einer Modulierung des nominellen Verhaltens des Coriolis-Massendurchflußmeßgeräts 1. Das vorliegend beschriebene Coriolis-Massendurchflußmeßgerät 1 wird in einer mechanischen Resonanz hoher Güte betrieben, so daß die von den Schwingungsaufnehmern 13 erfaßten Signale im Falle eines einphasigen Mediums monofrequente sinusförmige Signale sind. Entsprechendes gilt für die Signale der Schwingungsanregung, wenn diese direkt aus den Signalen der Schwingungsaufnehmer 13 gewonnen werden.

Mit dem Wissen über die nominelle Form der Signale kann ein Signalmodell erstellt werden. Ein Vergleich der berechneten Signale des Signalmodells mit den gemessenen Signalen ermöglicht dann die Berechnung von Indikatorgrößen für zwei Phasenströmungen. So stellt z. B. die mittlere Differenz aus einem gemessenen Signal x und einem aufgrund des Modells erwarteten Signal $X_{nom}$ ein Maß für die durch eine Zweiphasenströmung hervorgerufene Störung dar:

$$I_{31} = MW\left(\left|x - x_{nom}\right|\right).$$

Dabei kann als Signal eines der Signale von den Schwingungsaufnehmern 13, ein Signal der Schwingungsanregung oder eine Kombination dieser Signale verwendet werden.

Alternativ kann das nominelle Schwingungsverhalten des Coriolis-Massendurchflußmeßgeräts 1 durch ein Modell beschrieben werden. Dieses Modell kann über übliche Verfahren zur Parameterschätzung identifiziert werden. Dabei werden die tatsächlich gemessenen Signale $\underline{x}$ und Signale der Schwingungsanregung u des Coriolis-Massendurchflußmeßgeräts 1 genutzt, um z. B. mittels eines Least-Squares-Verfahren die Parameter des Modells M zu bestimmen. Die bei dieser Parameterschätzung ermittelten Residuen sind ein Maß für die Abweichung des Modells von den Meßwerten. Wenn das Modell das nominelle Verhalten des Coriolis-Massendurchflußmeßgeräts ohne Zweiphasenströmungen beschreibt, so sind die Residuen im Falle einer vorhandenen Zweiphasenströmung eine Indikatorgröße:

$$I_{32} = \mathrm{Re}\,siduen\left(\underline{x},\underline{u},M\right).$$

Bezüglich der Residuen wird verwiesen auf die Habilitationsschrift "Modellgestützte Selbstdiagnose von Prozeßsensoren", Kourosh Kolahi, Christian-Albrechts-Universität zu Kiel, 2001.

Die Modulierung des Coriolis-Massendurchflußmeßgeräts 1 kann auch so erweitert werden, daß die Zweiphasenströmung im Modell enthalten ist. Dies ist selbst dann möglich, wenn der genaue funktionale Zusammenhang der Wechselwirkung der Zweiphasenströmung mit dem Coriolis-Massendurchflußmeßgerät 1 unbekannt. Die Zweiphasenströmung kann als Störgröße im Modell des Coriolis-Massendurchflußmeßgeräts 1 betrachtet werden, die mit einem Störgrößenbeobachter bestimmt wird. Bezüglich eines solchen Störgrößenbeobachters wird verwiesen auf das "Taschenbuch der Regelungstechnik", Lutz, H.; Wendt, W., Verlag Harri Deutsch, 2003. Dadurch wird die Zweiphasenströmung durch Parameter p des Modells M beschrieben, die als Indikatorgrößen verwenden werden können:

$$I_{33} = \underline{p}\left(\underline{x},\underline{u},M\right).$$

Eine weitere Möglichkeit besteht in der Analyse des Spektrums der von den Sehwingungsaufnehmern 13 erfaßten Signale. Beim Entwurf eines Coriolis-Massendurchflußmeßgeräts 1 werden Resonanzfrequenzen und Güten der Eigenformen des Meßrohrs 10 festgelegt. Die Auswirkungen von Massendurchfluß, Dichte und Temperatur sowie die Signal-Rausch-Verhältnisse der verwendeten Schwingungsaufnehmer 13 sowie der Signalkette bestehend aus der analogen Verarbeitungsschaltung 17 und dem Analog/Digital-Wandler 18 sind bekannt. Damit kann im Betrieb des Coriolis-Massendurchflußmeßgeräts 1 für die gemessenen Prozeßbedingungen ein nominelles Spektrum der erfaßten Signale festgelegt werden. Die Abweichung von diesem Spektrum bzw. die Abweichung in einem geeigneten Teilfrequenzbereich des Spektrums ist eine Indikatorgröße für die Störungen durch die Zweiphasenströmung:

$$I_{34} = MW\left(\left|\sum_{i=1}^{n} DFT(x,\omega_i) - \sum_{i=1}^{n} DFT\left(\underline{P},\underline{x}_{nom},\omega_i\right)\right|\right).$$

Hierbei wurde z. B. die diskrete Fourier Transformation (DFT) zur Bestimmung des Spektrums verwendet DFT $(x, \omega_i)$ ist der Wert bei der Frequenz $\omega_i$ für das Signal x. DFT $(\underline{P}, x_{nom}, \omega_i)$ ist der Wert des nominellen Spektrums, berechnet als DFT bei der Frequenz $\omega_i$ für das nominelle Signal $x_{nom}$ und die aktuellen Prozeßbedingungen $\underline{P}$. Auch hier kann als Signal x ein Signal von einem der Schwingungsaufnehmer 13, ein Signal der Schwingungsanregung oder eine Kombination dieser Signale verwendet werden.

Eine vierte Gruppe von Indikatorgrößen basiert schließlich auf Laufzeiteffekten der Mehrphasenströmung zwischen zwei in Längsrichtung des Meßrohrs 10 voneinander beabstandeten Erfassungsstellen für die resultierenden Schwingungen, vorliegend also gegeben durch die beiden Schwingungsaufnehmer 13. Damit steht wenigstens ein Signal $X_{ein}$ der Schwingungen in der einlaufseitigen Hälfte des Meßrohrs 10 und ein Signal $X_{aus}$ der Schwingungen in der auslaufseitigen Hälfte des Meßrohrs 10 zur Verfügung. Das Rauschen eines einzelnen Signals bzw. der Verknüpfung der Signale ist schon in der zweiten Gruppe von Indikatorgrößen verwendet worden. Zusätzlich kann man noch das Rauschen des einlaufseitigen Signals mit dem Rauschen des auslaufseitigen Signals korrelieren und daraus die Laufzeit der Zweiphasenströmung zwischen den beiden Schwingungsaufnehmern 13 bestimmen. Aus der Strömungsgeschwindigkeit $\upsilon$ dessen Mediums im Meßrohr 10, berechnet aus dem erfaßten Massendurchfluß, kann ebenfalls die Laufzeit des Medium zwischen den Schwingungsaufnehmern 13 bestimmt werden. Durch den Vergleich dieser Laufzeiten erhält man eine weitere Indikatorgröße, die unabhängig ist von Störungen, die gleichzeitig auf beide Schwingungsaufnehmer einwirken:

$$I_{41} = f\left(Laufzeit(x_{ein}, x_{aus}), Laufzeit(v)\right).$$

Dabei ist die Funktion f (x) eine Rechenvorschrift, die einen großen Wert liefert, wenn die Differenz der beiden Laufzeiten klein ist, und einen kleinen Wert liefert, wenn die Differenz zwischen den beiden Laufzeiten groß ist. Dies kann beispielsweise durch Inversion des Betrages der Differenz der Laufzeiten erzielt werden.

Die Indikatorgrößen $I_{11}$ bis $I_{41}$ zeigen alle jeweils einen Wert, der größer ist, je stärker ausgeprägt die Zweiphasenströmung im Coriolis-Massendurchflußmeßgerät 1 ist. Eine einzelne Indikatorgröße kann jedoch Querempfindlichkeiten gegen andere Störungen des Coriolis-Massendurchflußmeßgeräts 1 aufweisen. So werden z. B. die Indikatorgrößen der ersten Gruppe auch von der Viskosität des strömenden Mediums beeinflußt. Die Indikatorgrößen der zweiten Gruppe und der dritten Gruppe können durch Vibrationen oder Pumpenpulsationen beeinflußt werden. Die Indikatorgrößen der vierten Gruppe können durch einen großen Unterschied in der Laufzeit des Trägermediums 20 und den Einschlüssen aus dem zweiten Medium 21 beeinflußt werden. Um nun eine sichere Detektion der Zweiphasenströmung zu gewährleisten, werden wenigstens zwei Indikatorgrößen zu einem gemeinsamen Wert kombiniert.

Gemäß dem vorliegend beschriebenen bevorzugten Ausführungsbeispiel der Erfindung erfolgt die Verknüpfung der Indikatorgrößen nun derart, daß die einzelnen Indikatorgrößen gewichtet werden, um einen größeren Wert zu liefern, je größer die Ausschläge der Gemeinschaft der verwendeten Indikatorgrößen sind. Ausschläge einzelner Indikatorgrößen alleine, z. B. verursacht durch die oben beschriebenen Querempfindlichkeiten, sollen keinen großen Ausschlag hervorrufen.

Damit ergibt sich ein Wert für die Zweiphasenströmung als

$$ZPS = g(I_{11}, ..., I_{nm}).$$

Dabei stellt die Funktion g() eine geeignete Rechenvorschrift dar, die die Indikatorgrößen derart miteinander verknüpft, daß der Wert ZPS größer ist, je stärker ausgeprägt die Zweiphasenströmung ist.

Beispiele für eine geeignete Verknüpfung sind Summen gewichteter Potenzen:

$$ZPS = a_{11} \cdot I_{11}^{b_{11}} + ... + a_{nm} \cdot I_{nm}^{b_{nm}}$$

oder Produkte von Potenzen

$$ZPS = I_{11}^{b_{11}} \cdot ... \cdot I_{nm}^{b_{nm}}$$

oder Mischformen davon

$$ZPS = a_{11} \cdot I_{11}^{b_{11}} + ... + a_{uv} \cdot I_{uv}^{b_{uv}} + a_{xy} I_{xy}^{b_{xy}} \cdot ... \cdot I_{kl}^{b_{kl}} + ... + a_{\alpha\beta} I_{\alpha\beta}^{b_{\alpha\beta}} \cdot ... \cdot I_{\kappa\lambda}^{b_{\kappa\lambda}}.$$

Zusätzlich kann die Formel g() noch eine Linearisierung und/oder Skalierung vorsehen, so daß der Wert ZPS linear mit einer Zustandsgröße der Zweiphasenströmung anwächst. Beispiele solcher Zustandsgrößen zur Beschreibung der Zweiphasenströmung sind die Massen- und Volumenverhältnisse der beiden Phasen.

Die Verknüpfung kann jedoch auch eine komplexe Rechenvorschrift sein, gegeben z. B. durch ein neuronales Netz oder einen Fuzzy-Logic-Alogorithm.us. Auch sind Schwellwerte denkbar, die von einzelnen Indikatorgrößen überschritten werden müssen, bevor die Indikatorgrößen miteinander verknüpft werden. Bei Unterschreitung der Schwellwerte würde der Wert ZPS festgehalten, z. B. ZPS =0.

Bei der Verknüpfung der Indikatorgrößen kann auch derart vorgegangen werden, daß mehrere Indikatorgrößen aus einer gemeinsamen Gruppe gleichzeitig verwendet werden. So ist z. B. die Resonanzfrequenz und damit die geregelte Phasendifferenz $\varphi_{AS}$ wesentlich schneller veränderlich als die Schwingungsamplitude $S$. Dem wird in der Recheneinheit 15 üblicherweise dadurch entsprochen, daß die jeweilige Signalverarbeitung und der Regelkreis für die Phasenamplitude mit unterschiedlichen Zeitkonstanten arbeiten. Dadurch können sich Zweiphasenströmungen z. B. abhängig von der Strömungsgeschwindigkeit oder abhängig von Verteilung und Anzahl der Einschlüsse des zweiten Mediums 21 unterschiedlich auf die Indikatorgrößen $I_{23}$ und $I_{24}$ auswirken. Bei gleichzeitiger Verwendung beider Indikatorgrößen kann somit eine sichere Detektion über einen weiten Bereich von Zweiphasenströmungen realisiert werden.

Generell steigt die Sicherheit der Detektion durch Erweiterung der Verknüpfung um weitere unabhängige Indikatorgrößen. Bei Wasser als Trägermedium 20 mit Einschlüssen aus Luft als zweitem Medium 21 kann die Bestimmung des Wertes ZPS jedoch erfolgreich schon über die einfache Verknüpfung

$$ZPS = I_{13} \cdot I_{23}$$

erfolgen. Untersuchungen haben gezeigt, daß diese Verknüpfung bei einem Meßumformer 3 mit einem einzelnen geraden Meßrohr 10 für eine sichere Detektion einer Zweiphasenströmung schon ausreichend ist.

**Patentansprüche**

1. Verfahren zum Betrieb eines Coriolis-Massendurchflußmeßgeräts (1), mit wenigstens einem von einem Medium durchströmten Meßrohr (10), das einer Schwingungsanregung unterworfen wird, was zu resultierenden Schwingungen des Meßrohrs (10) führt, wobei zur Detektion einer Mehrphasenströmung eine erste Indikatorgröße verwendet wird, **dadurch gekennzeichnet, daß** zur Detektion der Mehrphasenströmung eine zusätzliche, von der ersten Indikatorgröße unabhängige zweite Indikatorgröße verwendet wird.

2. Verfahren nach Anspruch 1, **dadurch gekennzeichnet, daß** die erste Indikatorgröße auf

   a) einer Größe basierend auf Reibungsverlusten innerhalb der Mehrphasenströmung,
   b) einer Größe basierend auf einer Inhomogenität der Mehrphasenströmung,
   c) einer Größe basierend auf einer Modellierung des nominellen Verhaltens des Coriolis-Massendurchflußmeßgeräts (1) oder
   d) einer Größe basierend auf Laufzeiteffekten der Mehrphasenströmung zwischen zwei in Längsrichtung des Meßrohrs (10) voneinander beabstandeten Erfassungsstellen für die resultierenden Schwingungen

   beruht und die zweite Indikatorgröße auf einer anderen dieser Größen a) - d) beruht.

3. Verfahren nach Anspruch 2, **dadurch gekennzeichnet, daß** zur Bestimmung einer Größe basierend auf Reibungsverlusten innerhalb der Mehrphasenströmung ausgewertet wird/werden: Die zur Schwingungsanregung des Meßrohrs (10) erforderliche Antriebsleistung, die Antriebsamplitude, die resultierende Schwingungsamplitude oder/und wenigstens eine von einer oder mehreren dieser Größen abgeleitete Größe.

4. Verfahren nach Anspruch 2 oder 3, **dadurch** gekennzeiehnet, daß eine Größe basierend auf der Inhomogenität der Mehrphasenströmung aus dem Rauschen eines internen Signals des Coriolis-Massendurchflußmeßgeräts (1) gewonnen wird.

5. Verfahren nach Anspruch 4, **dadurch gekennzeichnet, daß** als internes Signal des Coriolis-Massendurchflußmeßgeräts (1) vorgesehen ist/sind: Die Phasendifferenz zwischen zwei an in Längsrichtung des Meßrohrs (10) voneinander beabstandeten Erfassungsstellen erfaßten Signalen für die resultierenden Schwingungen, die Eigenfrequenz des durchströmten Meßrohrs (10), die Phasendifferenz zwischen der Schwingungsanregung und den resultierenden Schwingungen, die momentane Amplitude der Antriebsleistung pro Schwingungsamplitude oder/und wenigstens eine von einer oder mehrerer dieser Größen abgeleitete Größe, wie der Massendurchfluß durch das Meßrohr (10) oder/und die Dichte des strömenden Mediums.

**6.** Verfahren nach Anspruch 5, **dadurch gekennzeichnet, daß** für eine oder mehrere dieser Größen die Varianz, die Standardabweichung oder die Differenz aus Maximalwert und Minimalwert innerhalb eines Zeitintervalls bestimmt wird.

**7.** Verfahren nach einem der Ansprüche 2 bis 6, **dadurch gekennzeichnet, daß** zur Bestimmung einer Größe basierend auf einer Modellierung des nominellen Verhaltens des Coriolis-Massendurchflußmeßgeräts (1) die Abweichung eines erfaßten Signals von einem aufgrund der Modellierung erwarteten Signal bestimmt wird.

**8.** Verfahren nach Anspruch 7, **dadurch gekennzeichnet, daß** als erfaßtes Signal ein Signal der Schwingungsanregung des Meßrohrs (10), ein Signal der resultierenden Schwingungen des Meßrohrs (10) oder/und wenigstens eine von einer oder mehreren dieser Größen abgeleitete Größe verwendet wird/werden.

**9.** Verfahren nach einem der Ansprüche 2 bis 8, **dadurch gekennzeichnet, daß** zur Bestimmung einer Größe basierend auf Laufzeiteffekten der Mehrphasenströmung zwischen zwei in Längsrichtung des Meßrohrs (10) voneinander beabstandeten Erfassungsstellen für die resultierenden Schwingungen die Abweichung der berechneten Laufzeit aufgrund des ermittelten Massendurchflusses von einer für die Mehrphasenströmung bestimmten Laufzeit ermittelt wird.

**10.** Verfahren nach einem der Ansprüche 1 bis 9, **dadurch gekennzeichnet, daß** zur Detektion der Mehrphasenströmung wenigstens eine dritte Indikatorgröße verwendet wird.

**11.** Verfahren nach einem der Ansprüche 1 bis 10, **dadurch gekennzeichnet, daß** die Indikatorgrößen jeweils einen größeren Wert zeigen, je stärker ausgeprägt die Mehrphasenströmung ist.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4423168 A1

- US 4689989 A

**In der Beschreibung aufgeführte Nicht-Patentliteratur**

- **KOUROSH KOLAHI.** Modellgestützte Selbstdiagnose von Prozeßsensoren. Christian-Albrechts-Universität zu Kiel, 2001

- **LUTZ, H. ; WENDT, W.** Taschenbuch der Regelungstechnik. Verlag Harri Deutsch, 2003